# EUROPEAN PATENT APPLICATION

(11) **EP 1 688 756 A1**
(43) Date of publication of application: **09.08.2006**
(21) Application number: 06002061.7
(22) Date of filing: 01.02.2006
(51) Int. Cl.: G01S 1/00, G01S 5/14

(54) **Positioning system, communication base station, control method for a communication base station, control program for a communication base station and computer-readable recording medium recording the control program for a communication base station**

(30) Priority: 04.02.2005 JP 2005029421
(71) Applicant: SEIKO EPSON CORPORATION, Shinjuku-ku, Tokyo 163-0811 (JP)
(72) Inventor: Uozumi, Hiroshi, Suwa-shi Nagano-ken 392-8502 (JP)
(74) Representative: HOFFMANN EITLE

(57) **Abstract**

A positioning system, asynchronous between communication base stations, has a communication base station capable of receiving a satellite signal that is a signal from a positioning satellite and a terminal capable of communicating with the communication base station. The communication base station includes: satellite-time information generating means for continuously generating satellite-time information representative of a satellite-time that is a time of a positioning satellite on the basis of the satellite signal; satellite-orbit information generating means for generating satellite-orbit information at a time interval regulated by an effective time period of the satellite-orbit information representative of an orbit of the positioning satellite when generating the satellite-time information; satellite-time information transmitting means for sending the satellite-time information to the terminal and positioning-auxiliary information transmitting means for sending positioning auxiliary information including the satellite-orbit information to the terminal.

## Description

This application claims the priorities benefit under 35 U.S.C.§ 119 of Japanese Patent Application No.2005-029421 filed on Feb 4, 2005, which is hereby incorporated in its entirety by reference.

### BACKGROUND

### 1. Technical Field

The present invention relates to a positioning system, communication base station, control method for a communication base station, control program for a communication base station, and computer-readable recording medium recording a control program for a communication base station, on a communication network in a scheme asynchronous between base stations not having common reference timing such as the same clock between communication base stations.

### 2. Related Art

There is a positioning system conventionally placed in practical application, to locate the current position of a GPS receiver by utilization of a satellite navigation system such as a GPS (global positioning system).

The GPS receiver is to receive signals from, for example, three or more GPS satellites and determine a distance between the GPS satellites and the GPS receiver (hereinafter, referred to as a pseudo distance) depending upon the difference between the time of sending signals from the GPS satellites and the time of arriving of the signals at the GPS receiver (hereinafter, referred to as a delay time). By using the satellite-orbit information, as to the GPS satellites, carried on the signals received from the GPS satellites and the pseudo distance, an operation is performed to locate the current position.

In order to perform a positioning by use of the signals from the GPS satellites, there is a need to calculate the on-orbit positions of the GPS satellites by means of the information representative of precise orbits of the GPS satellites (hereinafter, referred to as ephemeris). For this reason, in the case where ephemeris is previously acquired, the time required for positioning can be shortened as compared to the case where ephemeris is not previously acquired.

In this relation, there is proposed an art that ephemeris is previously provided to a position detector (see JP-A-10-31061 (Fig. 1, etc.), for example).

However, where the GPS receiver is not in synchronism with the time at the GPS satellites (hereinafter, referred to as GPS time), further one GPS satellite is problematically needed for positioning, in order to calculate a time error at the GPS receiver.

Meanwhile, provided that the GPS receiver is required to separately acquire ephemeris and time information from a plurality of external apparatuses, there is possibly encountered a problem of traffic increase over a network.

### SUMMARY

An advantage of some aspects of the invention is to provide a positioning system, a communication base station, a control method for a communication base station, a control program for a communication base station, and a computer-readable recording medium recording a control program for a communication base station, that is allowed to acquire satellite-time information and satellite-orbit information while suppressing on-network traffic on a communication network in a scheme asynchronous between base stations.

According to a first aspect of the invention, there is provided a positioning system, asynchronous between communication base stations, having a communication base station capable of receiving a satellite signal that is a signal from a positioning satellite and a terminal capable of communicating with the communication base station, the communication base station comprising: satellite-time information generating means for continuously generating satellite-time information representative of a satellite-time that is a time of the positioning satellites on the basis of the satellite signal; satellite-orbit information generating means for generating satellite-orbit information at a time interval regulated by an effective time period of the satellite-orbit information representative of an orbit of the positioning satellite when generating the satellite-time information; satellite-time information transmitting means for sending the satellite-time information to the terminal; positioning-auxiliary information transmitting means for sending positioning auxiliary information including the satellite-orbit information to the terminal; and the terminal comprising: satellite-time information acquiring means for acquiring the satellite-time information from the communication base station; positioning-auxiliary information acquiring means for acquiring the positioning auxiliary information from the communication base station; and positioning means for locating a position of the terminal on the basis of a plurality of the satellite signals from the positioning satellites by use of the satellite-time information and the satellite-orbit information.

With this structure, the communication base station, having the satellite-time information generating means, is allowed to generate satellite-time information representative of a satellite-time that is a time of the positioning satellite on the basis of the satellite signals.

The communication base station receives the satellite signals from, for example, the four or more positioning satellites and determines a pseudo distance, i.e. a distance between the positioning satellites and the communication base station, according to a delay time that is a difference between a transmission time of the signals from the positioning satellites and an arrival time thereof at the communication base station. By using the satellite-orbit information about the positioning satellites contained in the satellite signal from the positioning satellites as well as the pseudo distance, operation is made to locate the current position. The positioning operation can calculate a coordinate (X, Y, Z) representative of the position of the communication base station and a time error of the communication base station, and also generate the satellite-time information.

In this manner, because receiving the satellite signals in order to generate the satellite-time information, the satellite-orbit information can be also generated upon generating the satellite-time information. Note that, because, for example, rough orbit information (almanac) as the satellite-orbit information has an effective time period of, for example, one week and precise orbit information (ephemeris) has an effective time period of 4 hours, there is no need to generate the satellite-orbit information whenever generating the satellite-time information.

In this respect, the communication base station, having the satellite-orbit information generating means, is allowed to generate satellite-orbit information representative of an orbit of the positioning satellites at a time interval regulated by the effective time period of the satellite-orbit information representative of an orbit of the positioning satellites on the basis of the satellite signals when generating the satellite-time information.

Consequently, instead of separately generating the satellite-time information and the satellite-orbit information, the satellite-orbit information can be generated upon generating the satellite-time information. This makes it possible to efficiently generate the satellite-time information and the satellite-orbit information.

Meanwhile, instead of generating the satellite-time information and the satellite-orbit information by separate apparatus, the communication base station generates both the satellite-time information and the satellite-orbit information. Thus, there is no need to provide a separate apparatus besides the communication base station, and hence no need for the terminal to communicate with such a separate apparatus. This suppresses traffic over a network.

This makes it possible to acquire satellite-time information and satellite-orbit information while suppressing traffic over a network.

Meanwhile, the terminal can acquire the satellite-time information from the communication base station by means of the satellite-time information acquiring means, and the positioning auxiliary information from the communication base station by means of the positioning-auxiliary information acquiring means.

The terminal is allowed to locate a position of the terminal by means of the positioning means on the basis of the satellite signals from the positioning satellites in plurality, by use of the satellite-orbit information and the current time information.

Accordingly, even where error is great between the time at the terminal itself and the satellite time, positioning time can be shortened because the satellite time can be located as the current time.

Meanwhile, because the terminal can previously acquire the positioning auxiliary information containing the satellite-orbit information from the communication base station by means of the positioning-auxiliary information acquiring means, positioning time can be shortened furthermore.

It is preferable that communication information to be sent by the communication base station is constituted with a plurality of frames, the satellite-time information generating means of the communication base station being configured to generate satellite-time information at a constant interval of the frames, the terminal having satellite-time estimating means for estimating the satellite-time information of the frames received immediately before, on the basis of the identification number of the frame received immediately before positioning and the satellite-time information generated by the base station.

With this structure, the satellite-time information generating means of the communication base station is configured to generate the satellite-time information at a constant interval of the frames. Accordingly, the communication base station is not required to generate the satellite-time information for each of the frames, thus relieving the processing burden.

Meanwhile, the terminal has the satellite-time estimating means for estimating the satellite time information of the frame received immediately before on the basis of the identification number of the frames received immediately before positioning and the satellite-time information generated by the base station. Accordingly, even in case the satellite-time information is not generated for each of the frames, the terminal can acquire the satellite-time information of the frame received immediately before positioning.

According to a second aspect of the invention, there is provided a communication base station on a communication network asynchronous between communication base stations, the communication base station comprising: satellite-time information generating means for generating continuously satellite-time information representative of a satellite time that is a time of a positioning satellite on the basis of a satellite signal from the positioning satellite; satellite-orbit information generating means for generating satellite-orbit information at a time interval regulated by an effective time period of the satellite-orbit information representative of a satellite orbit of the positioning satellite when generating the satellite-time information; satellite-time information transmitting means for sending the satellite-time information to the terminal; and positioning-auxiliary information transmitting means for sending positioning auxiliary information including the satellite-orbit information to the terminal.

With this structure, satellite-time information and satellite-orbit information can be acquired while suppressing traffic over a network.

According to a third aspect of the invention, there is provided a positioning system, asynchronous between communication base stations, having a communication base station capable of receiving a satellite signal that is a signal from a positioning satellite and a terminal capable of communicating with the communication base station, the communication base station comprising: communication-information transmitting means for sending communication information constituted by a plurality of frames to the terminal; satellite-time information generating means for continuously generating satellite-time information representative of a satellite-time that is a time of the positioning satellite at an interval of each of the frames of the communication information on the basis of the satellite signal; satellite-orbit information generating means for generating satellite-orbit information at a time interval regulated by an effective time period of the satellite-orbit information representative of an orbit of the positioning satellite when generating the satellite-time information; requested-satellite-time information transmitting means for sending, to the terminal, the satellite-time information in the frame requested from the terminal; positioning-auxiliary information transmitting means for sending positioning auxiliary information including the satellite-orbit information; and the terminal comprising: communication information receiving means for receiving the communication information from the communication base station; satellite-time information acquiring means for acquiring the satellite-time information in the frame received immediately before positioning, from the communication base station; positioning-auxiliary information acquiring means for acquiring the positioning auxiliary information from the communication base station; and positioning means for locating a position of the terminal on the basis of the satellite signals from a plurality of the positioning satellites by use of the satellite-time information and the satellite-orbit information.

With this structure, the communication base station can transmit the communication information constituted by a plurality of frames to the terminal by means of the communication-information transmitting means.

The communication base station can generate satellite-time information representative of a satellite time that is a time of the positioning satellite on the basis of the satellite signal, by the satellite-time information generating means. By the requested-satellite-time information transmitting means, the communication base station can send the satellite-time information as to the frame requested from the terminal.

Meanwhile, the communication base station can generate satellite-orbit information representative of an orbit of the positioning satellite on the basis of the satellite signal, by the satellite-orbit information generating means.

The communication base station is allowed to generate the satellite-orbit information upon generating the satellite-time information because of receiving the satellite signal in order to generate satellite-time information.

This makes it possible to generate the satellite-orbit information upon generating the satellite-time information instead of separately generating the satellite-time information and the satellite-orbit information, thus efficiently generating the satellite-time information and the satellite-orbit information.

Instead of generating the satellite-time information and the satellite-orbit information by separate apparatuses, the communication base station generates both of the satellite-time information and the satellite-orbit information. Thus, there is no need to provide a separate apparatus besides the communication base station, and hence no need for the terminal to communicate with such a separate apparatus. This suppresses traffic over a network.

This makes it possible to acquire satellite-time information and satellite-orbit information while suppressing traffic over a network.

Meanwhile, the terminal can receive the communication information from the communication base station by means of the communication-information receiving means. The terminal can acquire the satellite-time information of the frame received immediately before positioning from the communication base station by means of the satellite-time information acquiring means, and the positioning auxiliary information from the communication base station by means of the positioning-auxiliary information acquiring means.

Thus, the terminal is allowed to locate a position of the terminal by means of the positioning means on the basis of the satellite signals from a plurality of the positioning satellites by use of the satellite-time information and the satellite-orbit information.

Namely, the terminal is allowed to perform a positioning by use of the satellite-time information representative of a transmission time of the frame received immediately before the positioning. This can shorten the positioning time.

Meanwhile, because the terminal can previously acquire the positioning auxiliary information containing the satellite-orbit information from the communication base station by means of the positioning-auxiliary information acquiring means in the above manner, the positioning time can be shortened furthermore.

According to a fourth aspect of the invention, there is provided a communication base station on a communication network asynchronous between communication base stations, the communication base station comprising: a communication information transmitting means for sending communication information constituted by a plurality of frames, to the terminal; satellite-time information generating means for continuously generating, for each of the frames of the communication information, satellite-time information representative of a satellite-time that is a time of the positioning satellite on the basis of the satellite signal; satellite-orbit information generating means for generating satellite-orbit information at a time interval regulated by an effective time period of satellite-orbit information representative of an orbit of the positioning satellite when generating the satellite-time information; requested-satellite-time information transmitting means for sending satellite-time information as to the frame requested from the terminal, to the terminal; and positioning-auxiliary information transmitting means for sending positioning auxiliary information including the satellite-orbit information to the terminal.

This makes it possible to acquire positioning auxiliary information including satellite-time information and satellite-orbit information while suppressing traffic over a network, similarly to the third aspect of the invention.

According to a fifth aspect of the invention, there is provided a control method for a communication base station, comprising the steps of: generating continuously satellite-time information representative of a satellite-time that is a time of a positioning satellite on the basis of satellite signal that is a signal from the positioning satellite, by a communication base station on a communication network asynchronous between communication base stations; generating satellite-orbit information at a time interval regulated by an effective time period of the satellite-orbit information representative of an orbit of the positioning satellite when generating the satellite-time information, by the communication base station; sending the satellite-time information to the terminal, by the communication base station; and sending positioning auxiliary information including the satellite-orbit information to the terminal, by the communication base station.

This makes it possible to acquire satellite-time information and satellite-orbit information while suppressing traffic over a network, similarly to the second aspect of the invention.

According to a sixth aspect of the invention, there is provided a communication base station control program allowing a computer to execute the steps of: generating continuously satellite-time information representative of a satellite-time that is a time of a positioning satellite on the basis of a satellite signal that is a signal from the positioning satellite, by a communication base station on a communication network asynchronous between communication base stations; generating satellite-orbit information at a time interval regulated by an effective time period of satellite-orbit information representative of an orbit of the positioning satellite when generating the satellite-time information, by the communication base station; sending the satellite-time information to the terminal, by the communication base station; and sending positioning auxiliary information including the satellite-orbit information to the terminal, by the communication base station.

According to a seventh aspect of the invention, there is provided a computer-readable recording medium recording a control program for a communication base station, allowing a computer to execute the steps of: generating continuously satellite-time information representative of a satellite-time that is a time of a positioning satellite on the basis of a satellite signal that is a signal from the positioning satellite, by a communication base station on a communication network asynchronous between communication base stations; generating satellite-orbit information at a time interval regulated by an effective time period of satellite-orbit information representative of an orbit of the positioning satellite when generating the satellite-time information, by the communication base station; sending the satellite-time information to the terminal, by the communication base station; and sending positioning auxiliary information including the satellite-orbit information to the terminal, by the communication base station.

### BRIEF DESCRIPTION OF THE DRAWINGS

The invention will be described with reference to the accompanying drawings, wherein like numbers reference like elements.

Fig. 1 is a schematic figure showing a positioning system according to an embodiment of the invention.

Fig. 2 is a schematic diagram showing a main hardware arrangement of a base station.

Fig. 3 is a schematic diagram showing a main hardware arrangement of a terminal.

Fig. 4 is a schematic diagram showing a main software configuration of the base station.

Fig. 5 is a schematic figure showing an example of communication information.

Fig. 6 is a figure showing an example of a data structure of a GPS-time information database.

Fig. 7 is an explanatory figure on an example of GPS time information to be sent.

Fig. 8 is a schematic diagram showing a main software configuration of the terminal.

Fig. 9 is a schematic flowchart showing an operation example of the positioning system.

Fig. 10 is a schematic diagram showing a main software configuration of the base station.

Fig. 11 is a figure showing an example of a data structure of a GPS-time information database.

Fig. 12 is an explanatory figure on an example of GPS time information to be sent.

Fig. 13 is a schematic diagram showing a main software configuration of the terminal.

Fig. 14 is a schematic diagram showing a main software configuration of the base station.

Fig. 15 is a schematic diagram showing a main software configuration of the terminal.

### DESCRIPTION OF EXEMPLARY EMBODIMENTS

Embodiments of the present invention will now be described in detail while referring to the drawings.

The following embodiments are preferable examples of the invention and limited variously technically preferably. However, note that the scope of the invention is not limited to those forms unless otherwise especially limiting the invention in the ensuing description.

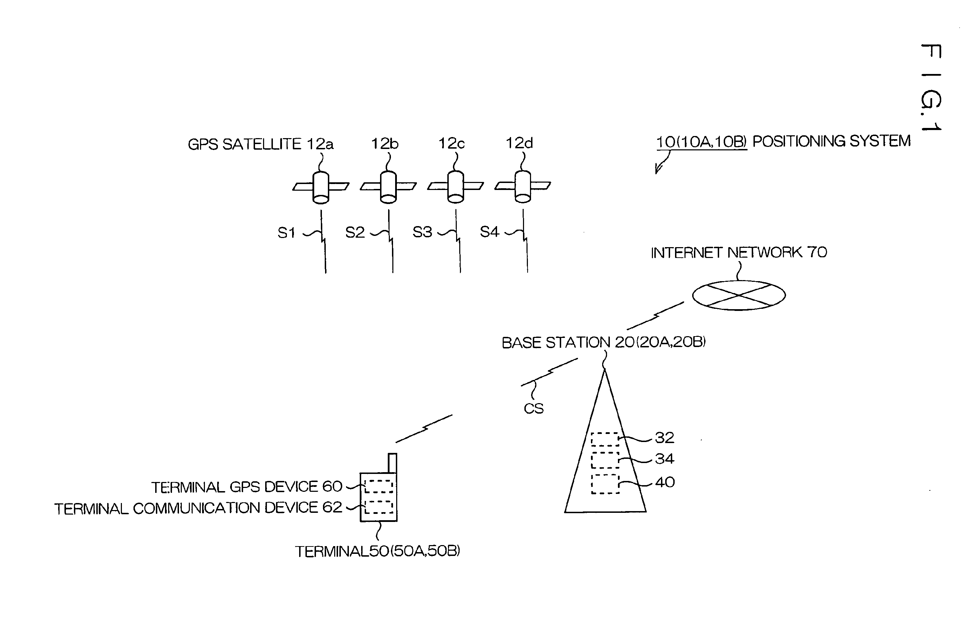

Fig. 1 is a schematic diagram showing a positioning system 10, etc. according a first embodiment of the invention.

As shown in Fig. 1, the positioning system 10 includes a base station 20, a terminal 50 which is capable of communicating with the base station 20. The base station 20 is an example of the communication base station. The terminal 50 is an example of the terminal.

The base station 20 has a base-station GPS device 32, to receive signals S1, S2, S3 and S4 from GPS satellites 12a, 12b, 12c and 12d. GPS satellites12a, 12b, 12c and 12d are examples of the positioning satellites. The signals S1, etc. are examples of the satellite signals.

The base station 20 has a base-station communication device 34, to send communication information CS to the terminal 50 having a terminal communication device 62. The base-station communication device 34 is an example of the communication-information transmitting means.

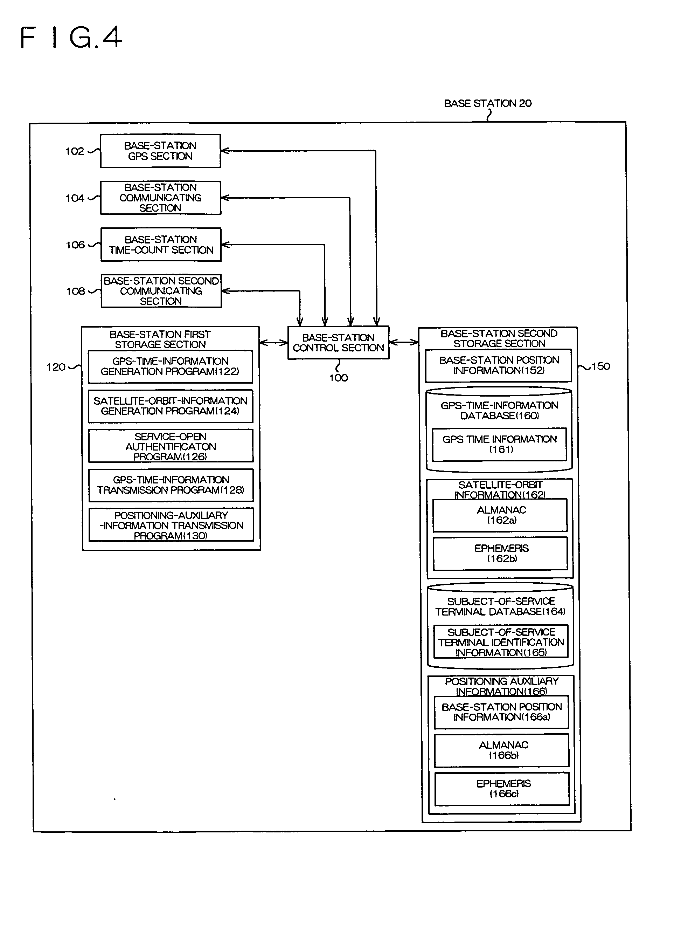

The base station 20 also has a base-station second communication device 40, to send positioning auxiliary information 166, referred later (see Fig. 4) to the terminal 50.

Incidentally, although the base station 20 and the terminal 50 are each existent in plurality, they are omitted in the showing except for those shown in Fig. 1.

The base stations 20 are not in synchronism one with another, constituting a communication network out of synchronism between communication base stations.

The terminal 50 has a terminal GPS device 60, to receive signals S1, etc. from the GPS satellites 12a, etc. The terminal 50 is, for example, a cellular phone, a PHS (personal handy-phone system) or a PDA (personal digital assistant), which are however not limitative.

The GPS satellites 12a, etc. are not limited to four in the number but may be, for example, three, or five or more, differently from the embodiment.

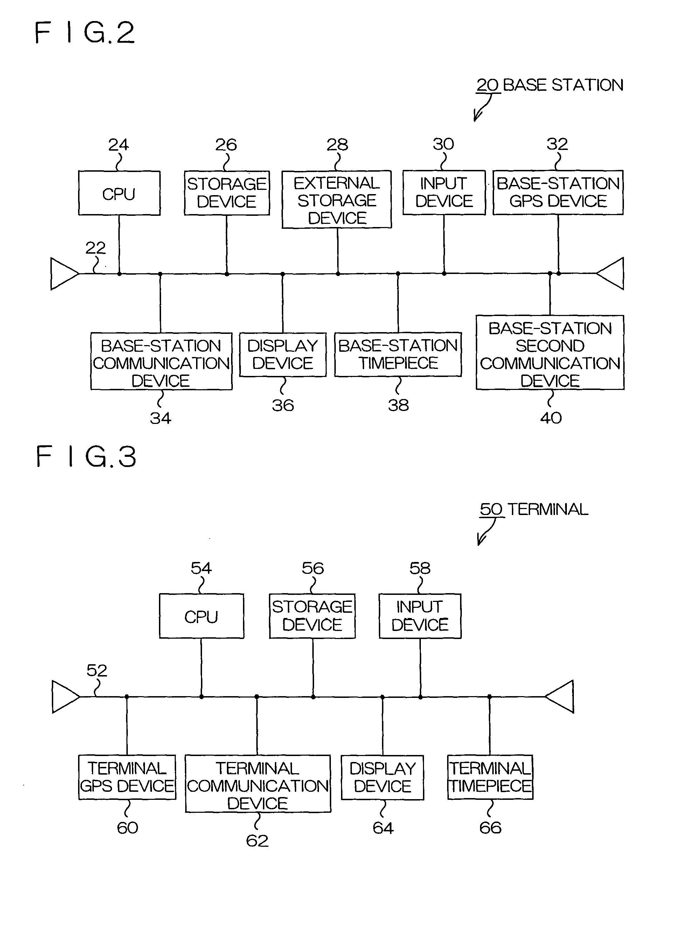

Base-Station Main Hardware Arrangement
Fig. 2 is a schematic diagram showing a main hardware arrangement of the base station 20.

As shown in Fig. 2, the base station 20 has a computer while the computer has a bus 22.

The bus 22 is connected with a CPU (central processing unit) 24, a storage device 26, an external storage device 28 and so on. The storage device 26 is, for example, a RAM (random access memory), a ROM (read only memory) or the like. The external storage device 28 is, for example, an HD (hard disc).

The bus 22 is connected with an input device 30 for inputting various pieces of information, a base-station GPS device 32 and a base-station communication device 34. The base-station communication device 34 is configured to send communication information CS for communication with the terminal 50.

Meanwhile, the bus 22 is also connected with a display device 36 to display various pieces of information, and a base-station timepiece 38. The base-station timepiece 38 is out of synchronism with other base stations 20 nor with the time of GPS satellites 20, etc. (hereinafter, referred to as GPS time).

Furthermore, the bus 22 is connected with a base-station second communication device 40. The base-station second communication device 40 is configured to send GPS time information 161 and positioning auxiliary information 166 (see Fig. 4), referred later.

Terminal Main Hardware Arrangement
Fig. 3 is a schematic diagram showing a main hardware arrangement of the terminal 50.

As shown in Fig. 3, the terminal 50 has a computer while the computer has a bus 52.

The bus 52 is connected with a CPU 54, a storage device 56, an input device 58, a terminal GPS device 60, a terminal communication device 62, a display device 64 and a terminal timepiece 66.

The terminal GPS device 60 includes a radio-frequency processor section (not shown) and a base-band section (not shown). The radio-frequency processor section down-converts the frequency of the analog signal S1 from the GPS satellite 12a or the like and converts it into a digital signal after orthogonal separation thereof. The base-band section removes a carrier-frequency component out of the digital signal generated by the radio-frequency processor section to regenerate the base-band signal.

Base Station Main Software Configuration
Fig. 4 is a schematic diagram showing a main software configuration of the base station 20.

As shown in Fig. 4, the base station 20 has a base-station control section 100 for control of various sections, a base-station GPS section 102 corresponding to the base-station GPS device 32 of Fig. 2, a base-station communicating section 104 corresponding to the base-station communication device 34 of Fig. 2, and so on. The base-station communicating section 104 is an example of the communication-information transmitting means.

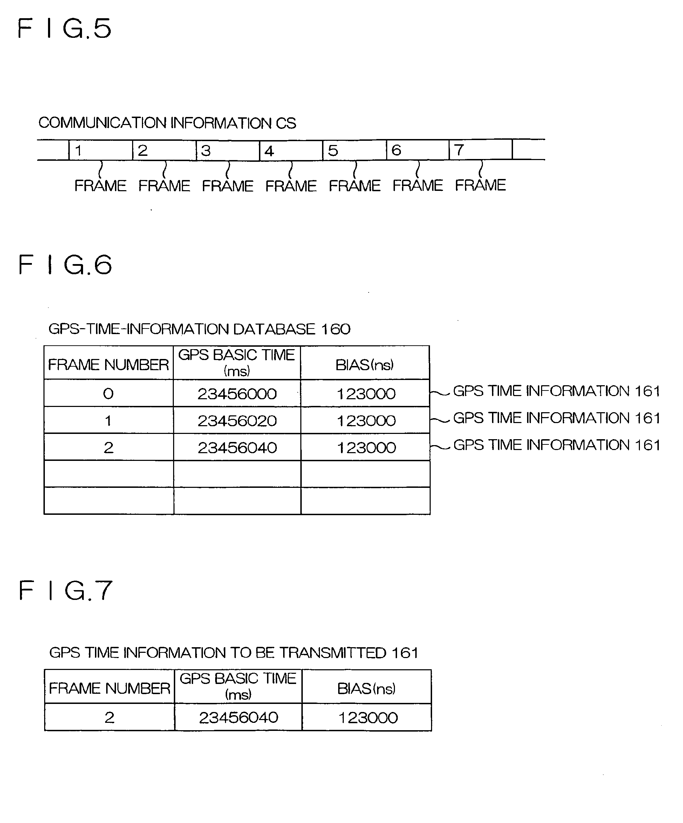

Fig. 5 is a figure showing an example of communication information CS.

As shown in Fig. 5, the communication information CS is configured by a plurality of frames wherein each frame is given with frame number 1 or the like in order to distinguish it from other frames.

The base station 20 also has a base-station timepiece section 106 corresponding to the base-station timepiece 38 of Fig. 2, a base-station second communicating section 108 corresponding to thebase-station second communication device 40 of Fig. 2, and so on.

The base station 20 furthermore has a base-station first storage section 120 that stores various programs, and a base-station second storage section 150 that stores various pieces of information.

As shown in Fig. 4, the base station 20 stores base-station-position information 152, in its base-station second storage section 150. The base-station position information 152 is information representative of a position of the base station 20, e.g. representing the position of base-station 20 in terms of latitude, longitude and altitude.

As shown in Fig. 4, the base station 20 stores a GPS-time information generation program 122, in its base-station first storage section 120. The GPS-time information generation program 122 is a program that allows the base-station control section 100 to generate GPS-time information 161 representative of a GPS time, frame by frame, on the basis of the signals S1, etc. (see Fig. 1) from the GPS satellites 12a, etc. Namely, the GPS-time information generation program 122 and the base-station control section 100 are as a whole an example of the satellite-time information generating means.

The GPS time represented by the GPS-time information 161 is constituted with a GPS-basic time in units of milliseconds (ms) and a bias in units of nanoseconds (ns).

Specifically, the base-station control section 100 receives signals S1, etc. from four or more GPS satellites 12a, etc. and determines a pseudo distance, a distance between the satellites 12a, etc. and the base station 20, according to a delay time that is a difference between a transmission time of signals S1, etc. from the GPS satellites 12a, etc. and an arrival time thereof at the base station 20. Using the satellite-orbit information as to the GPS satellites 12a, etc. contained in the signals S1, etc. from the GPS satellites 12a, etc. and the pseudo distance, a positioning operation is performed as to the current position. In the positioning operation, along with the coordinate (x, y, z) representing the position, a time error can be calculated as to the base station 20 which enables to generate GPS-time information 161.

The base-station control section 100 continuously generates GPS-time information 161 and stores those to a GPS-time information database 160 of the base-station second storage section 150.

Fig. 6 is a figure showing an example of data structure of the GPS-time information database 160. As shown in Fig. 6, the respective pieces of GPS-time information 161 are stored associatively with frame numbers.

As shown in Fig. 4, the base station 20 stores a satellite-orbit information generation program 124, in its base-station first storage section 120. The satellite-orbit information generation program 124 is a program that allows the base-station control section 100 to generate satellite-orbit information 162 representative of an orbit of the GPS satellites 12a, etc. Namely, the satellite-orbit information generation program 124 and the base-station control section 100 are as a whole an example of the satellite-orbit information generating means.

As described above, because the base station 20 receives signals S1, etc. in order to generate GPS-time information 161, it can generate satellite-orbit information 162 based upon the signals S1, etc. upon generating GPS-time information 161.

Consequently, satellite-orbit information 162 can be generated upon generating GPS-time information 161 instead of separately generating GPS-time information 161 and satellite-orbit information 162. This makes it possible to generate GPS-time information 161 and satellite-orbit information 162 with efficiency.

Meanwhile, because the base station 20 generates both GPS-time information 161 and satellite-orbit information 162 instead of generating GPS-time information 161 and satellite-orbit information 162 by separate apparatuses, there is no need to provide a separate apparatus except for the base station 20. The terminal 50 is not required to communicate with such a separate apparatus, thus suppressing traffic over the network.

The satellite-orbit information 162 includes, for example, almanac 162a that is rough-orbit information about all the GPS satellites 12a, etc. and ephemeris 162b that is precise-orbit information about each of the GPS satellites 12a, etc. The satellite-orbit information 162 is used to perform a positioning based upon signals S1, etc. from the GPS satellites 12a, etc.

Note that the base-station control section 100 generates GPS-time information 161 continuously and satellite-orbit information 162 at a constant-time interval. Namely, the base-station control section 100 generates, for example, almanac 162a at a time interval of 7 days and ephemeris 162b at a time interval of 4 hours, instead of generating satellite-orbit information 162 whenever generating GPS-time information 161. The time intervals of generating almanac 162a and ephemeris 162b are defined respectively by effective time periods. In this manner, because the base-station control section 100 generates satellite-orbit information 162 at a constant time interval dependently upon the time interval regulated by the effective time period thereof, processing burden can be relieved as compared to the case of generating it whenever generating GPS-time information 161.

Incidentally, differently from the present embodiment, the base-station control section 100 may receive a signal from one GPS satellite and generate GPS-time information 161. In case the coordinate representing a position of the base station 20 is correctly known, GPS-time information 161 can be generated by receiving a single signal S1 from one GPS satellite 12a. In this case, the ephemeris the base-station control section 100 can generate is limited only to those concerning the one GPS satellite 12a. By regularly changing the GPS satellite 12a used in generating GPS-time information 161 to another GPS satellite 12b or the like, ephemeris is generated as to all the GPS satellites 12a, etc.

As shown in Fig. 4, the base station 20 stores a subject-of-service-terminal database 164, in its base-station second storage section 150. The subject-of-service-terminal database 164 stores therein subject-of-service-terminal identification information 165. The subject-of-service-terminal identification information 165 is, for example, information representative of an identification number that distinguishes the terminal 50 from other terminals.

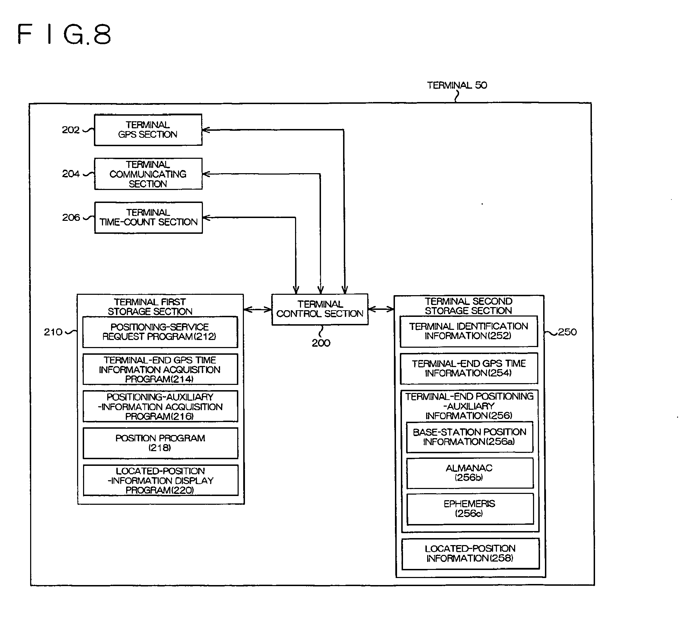

As shown in Fig. 4, the base station 20 stores a service-opening authentication program 126, in its base-station first storage section 120. The service-opening authentication program 126 is a program that allows the base-station control section 100 to determine whether or not the terminal 50 is qualified for a positioning service with the base station 20, on the basis of the subject-of-service-terminal identification information 165 stored in the subject-of-service-terminal database 164 of the base-station second storage section 150 and the terminal-identification information 252 (see Fig. 8) from the terminal 50.

Specifically, the base-station control section 100 determines the terminal 50 is qualified for a positioning service in case the identification number, represented by the terminal identification information 252 from the terminal 50, agrees with any of identification numbers represented by the subject-of-service-terminal identification information 165.

As shown in Fig. 4, the base station 20 stores a GPS-time information transmission program 128, in its base-station first storage section 120. The GPS-time information transmission program 128 is a program that allows the base-station control section 100 to send GPS-time information 161 according to a request from the terminal 50 by means of the base-station second communicating section 108. Namely, the GPS-time information transmission program 128, the base-station control section 100 and the base-station second communicating section 108 are as a whole an example of the satellite-time information transmitting means.

Fig. 7 is a figure showing an example of GPS-time information 161 that is sent by the base station 20.

As shown in Fig. 7, the base-station control section 100 sends only GPS-time information 161 representative of a GPS time as to, for example, frame number 2, the newest frame number.

As shown in Fig. 4, the base station 20 stores a positioning-auxiliary information transmission program 130, in its base-station first storage section 120. The positioning-auxiliary information transmission program 130 is a program that the base-station control section 100 is allowed to send position-auxiliary information 166 containing satellite-orbit information 162 by means of the base-station second communicating section 108. Namely, the positioning-auxiliary information transmission program 130, the base-station control section 100 and the base-station second communicating section 108 are as a whole an example of the positioning-auxiliary information transmitting means.

As shown in Fig. 4, the positioning-auxiliary information 166 contains base-station position information 166a, almanac 166b and ephemeris 166c. Of those, the base-station position information 166a is used as an initial position in locating the current position of the terminal 50.

By structure of the configuration, the base station 20 is allowed to generate both GPS-time information 161 and positioning-auxiliary information 166, and sends those to the terminal 50. This eliminates the need to provide a separate apparatus additionally to the base station 20, hence eliminating the need for the terminal 50 to communicate with such a separate apparatus. Thus, traffic can be suppressed over the network.

This makes it possible to acquire positioning-auxiliary information 166 containing almanac 166b and ephemeris 166c as well as GPS-time information 161 while suppressing the traffic over a network.

Terminal Main Software Configuration
Fig. 8 is a schematic diagram showing a main software configuration on the terminal 50.

As shown in Fig. 8, the terminal 50 has a terminal control section 200 for control of various sections, a terminal GPS section 202 corresponding to the terminal GPS device 60 of Fig. 3, a terminal communicating section 204 corresponding to the terminal communication device 62 of Fig. 3, and a terminal timepiece section 206 corresponding to the terminal timepiece 66 of Fig. 3, and so on.

The terminal 50 also has a terminal first storage section 210 storing various programs and a terminal second storage section 250 storing various pieces of information.

As shown in Fig. 8, the terminal 50 stores terminal identifying information 252 in its terminal second storage section 250. The terminal identification information 252 is, for example, an identification number to distinguish the terminal 50 from other terminals.

As shown in Fig. 8, the terminal 50 stores a positioning-service request program 212, in its terminal first storage section 210. The positioning-service request program 212 is a program that allows the terminal control section 200 to request the base station 20 to open a positioning service. Here, the positioning service means to provide GPS-time information 161 and positioning-auxiliary information 166.

As shown in Fig. 8, the terminal 50 stores a terminal-end GPS-time information acquisition program 214, in its terminal first storage section 210. The terminal-end GPS-time information acquisition program 214 is a program that allows the terminal control section 200 to acquire GPS-time information 161 (see Fig. 4) from the base station 20 by means of the terminal communicating section 204. Namely, the terminal-end GPS-time information acquisition program 214, terminal control section 200 and terminal communicating section 204 are as a whole an example of the satellite-time information acquiring means.

The terminal control section 200 stores acquired GPS-time information 161, as terminal-end GPS-time information 254, to the terminal second storage section 250.

As shown in Fig. 8, the terminal 50 stores a positioning-auxiliary information acquisition program 216, in its terminal first storage section 210. The positioning-auxiliary information acquisition program 216 is a program that allows the terminal control section 200 to acquire positioning auxiliary information 166 (see Fig. 4) from the base station 20 by means of the terminal communication section 204. Namely, the positioning-auxiliary information acquisition program 216, the terminal control section 200 and the terminal communicating section 204 are as a whole an example of the positioning-auxiliary information acquiring means.

The terminal control section 200 stores the acquired positioning auxiliary information 166 as terminal-end positioning auxiliary information 256, to the terminal second storage section 250.

As shown in Fig. 8, the terminal 50 stores a positioning program 218 in its terminal first storage section 210. The positioning program 218 is a program that allows the terminal control section 200 to locate a position of the terminal 50 on the basis of signals S1, etc. from the GPS satellites 12a, etc. in plurality, by use of terminal-end GPS-time information 254 and terminal-end positioning auxiliary information 256. Namely, the positioning program 218 and terminal control section 200 are as a whole an example of the positioning means.

The terminal control section 200 stores the located-position information 258 generated by positioning, to the terminal second storage section 250.

As shown in Fig. 8, the terminal 50 stores a located-position-information display program 220 in the terminal first storage section 210. The located-position information display program 220 is a program that allows the terminal control section 200 to display located-position information 258 on the display 64 (see Fig. 3).

As described above, the terminal 50 can receive GPS-time information 161 and positioning auxiliary information 166 from the base station 20.

Thus, the terminal 50 is allowed to locate a position of the terminal 50 on the basis of signals S1, etc. from the GPS satellites 12a, etc. by use of GPS time information 161 and positioning auxiliary information 166.

The terminal 50 can shorten the time of positioning upon locating a GPS time of GPS time information 161 as the current time.

Meanwhile, because the terminal 50 can previously acquire positioning auxiliary information 166 from the base station 20 as noted before, the positioning time can be shortened furthermore.

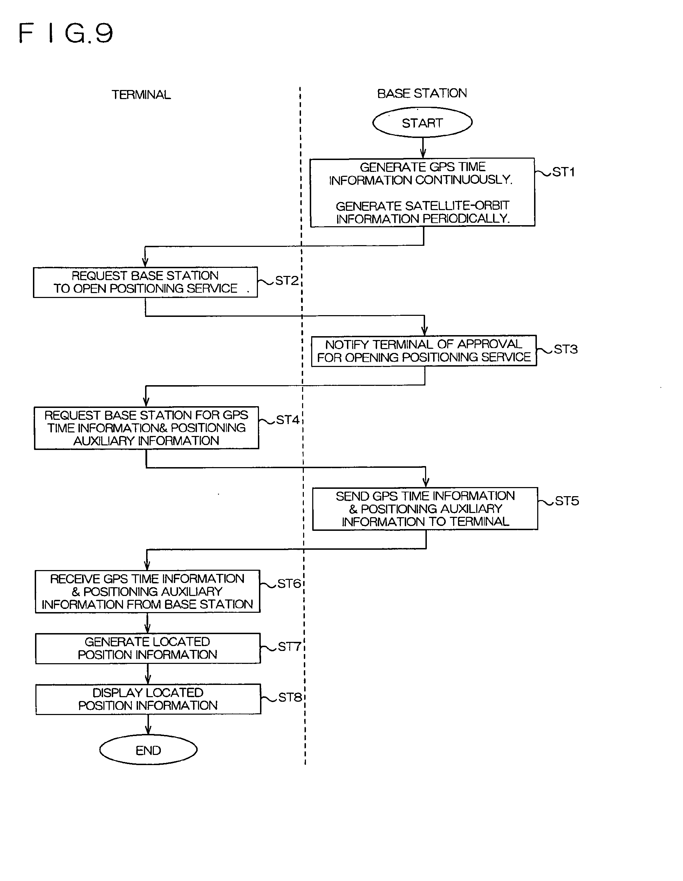

The positioning system 10 in the present embodiment is described in the above, and the operation example thereof is described using mainly Fig. 9.

Fig. 9 is a schematic flowchart showing an operation example of the positioning system 10 according to the present embodiment.

The base station 20 generates continuously GPS time information 161 and periodically satellite-orbit information 162 (step ST1 in Fig. 9). The step ST1 is an example of the step of generating satellite-time information, and also an example of the step of generating satellite-orbit.

Subsequently, the terminal 50 requests the base station 20 to open a positioning service (step ST2).

In response, the base station 20 notifies the terminal 50 of an approval for opening a positioning service (step ST3).

Subsequently, the terminal 50 requests GPS time information 161 and positioning auxiliary information 166 to the base station 20 (step ST4).

In response, the base station 20 sends GPS time information 161 and positioning auxiliary information 166 to the terminal 50 (step ST5). The step ST5 is an example of the step of transmitting satellite-time information, and also an example of the step of transmitting auxiliary information.

Subsequently, the terminal 50 receives the GPS time information 161 and the positioning auxiliary information 166 from the base station 20 (step ST6).

Subsequently, the terminal 50 performs a positioning based on the signals S1, etc. from the GPS satellites 12a, etc. by use of terminal-end GPS time information 254 and terminal-end positioning auxiliary information 256, thus generating located-position information 258 (step ST7).

Subsequently, the terminal 50 displays the located-position information 258 on the display 64 (see Fig. 3) (step ST8).

As explained above, the positioning system 10 is allowed to acquire satellite-orbit information and satellite-time information while suppressing the traffic over the network.

### Second Embodiment

Description is now made on a second embodiment.

A positioning system 10A (see Fig. 1) in the second embodiment is common in greater part to the positioning system 10 of the first embodiment, and hence the same references are given to the common elements, to describe mainly the different points by omitting duplicated explanations.

In the positioning system 10A of the second embodiment, a base station 20A generates GPS-time information 161 at a constant interval of frames instead of generating GPS-time information 161 frame by frame.

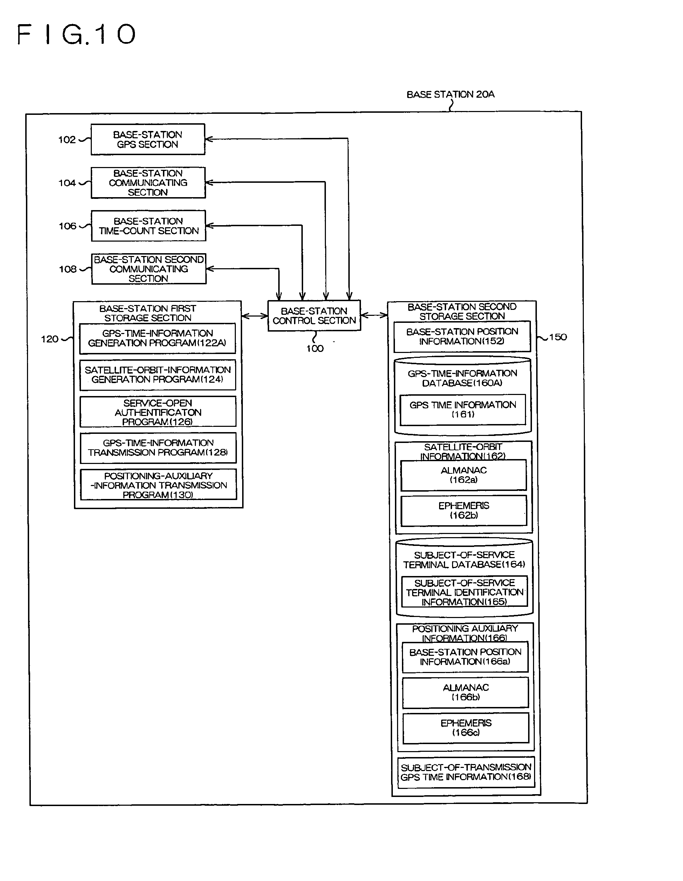

Fig. 10 is a schematic diagram showing a main software configuration of the base station 20A.

As shown in Fig. 10, the base station 20A stores a GPS-time information generation program 122A, in its base-station first storage section 120. The GPS-time information generation program 122A is a program that allows the base-station control section 100 to generate GPS-time information 161 at a constant interval of frames.

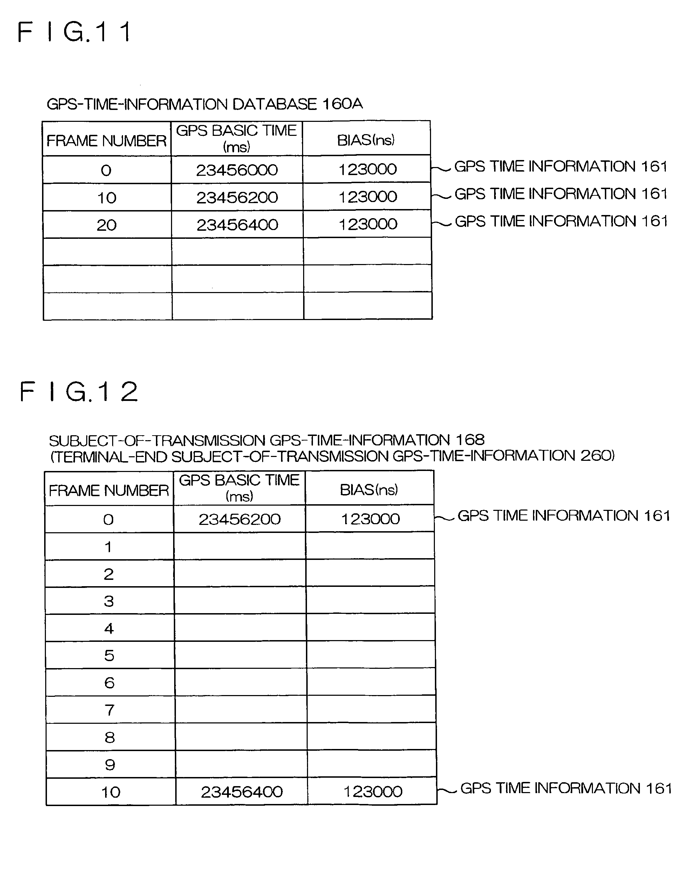

Fig. 11 is a figure showing an example in data structure of the GPS-time information database 160A.

As shown in Fig. 11, GPS-time information 161 is generated at a rate of, for example, once per successive 10 frames.

For this reason, the base station 20A is not required to generate GPS-time information 161 for every frame, thus relieving processing burden.

Fig. 12 is a figure showing an example of subject-of-transmission GPS-time information 168 to be sent by the base station 20A to the terminal 50.

As shown in Fig. 12, the base station 20A sends, for example, frame number 20 of GPS-time information 161 generated immediately before and frame number 10 of GPS-time information 161 generated preceding to that, as subject-of-transmission GPS-time information 168, to the terminal 50.

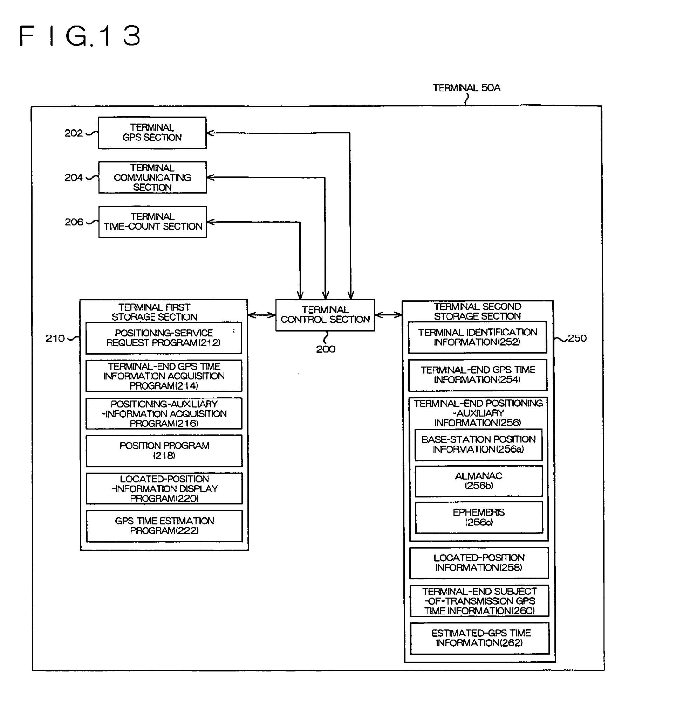

Fig. 13 is a schematic diagram showing a main software configuration of a terminal 50A.

As shown in Fig. 13, the terminal 50A stores the subject-of-transmission GPS-time information 168 acquired from the base station 20A, as terminal-end subject-of-transmission GPS-time information 260, in its terminal second storage section 250.

As shown in Fig. 13, the terminal 50A stores a GPS-time estimation program 222, in its terminal first storage section 210. The GPS-time estimation program 222 is a program that allows the terminal control section 200 to estimate a GPS time as to the frame received immediately before the positioning, on the basis of the identification number of the frame (see Fig. 5) of communication information CS received immediately before the positioning and the terminal-end subject-of-transmission GPS-time information 260. Namely, the GPS-time estimation program 222 and terminal control section 200 are as a whole an example of the satellite-time estimating means.

For example, the terminal control section 200 recognizes a fact that GPS time is in units of 20 milliseconds (ms) and that GPS time is measured at an interval of 10 frames, on the basis of terminal-end subject-of-transmission GPS time information 260. When the frame received immediately before the positioning has frame number 19, the GPS time is estimated as 23456380 milliseconds (ms) that is 20 milliseconds (ms) earlier than the time of frame number 20.

Accordingly, even where GPS-time information 161 is not generated for every frame, the terminal 50 is allowed to acquire the GPS-time information about the frame received immediately before the positioning.

### Third Embodiment

Description is now made on a third embodiment.

A positioning system 10B (see Fig. 1) in the third embodiment is common in greater part to the positioning system 10 of the first embodiment, and hence the same references are given to the common elements, so as to describe mainly the different points by omitting duplicated explanations.

In the positioning system 10B of the third embodiment, a terminal 50B does not perform a positioning based on, as the current time, the GPS time information 161 acquired from the base station 20B. Instead, it acquires, from the base station 20B, the GPS-time information 161 corresponding to the frame number of the communication information CS received immediately before the positioning from the base station 20B, and calculates a reception time of the frame number of communication information CS received from the base station 20B immediately before the positioning.

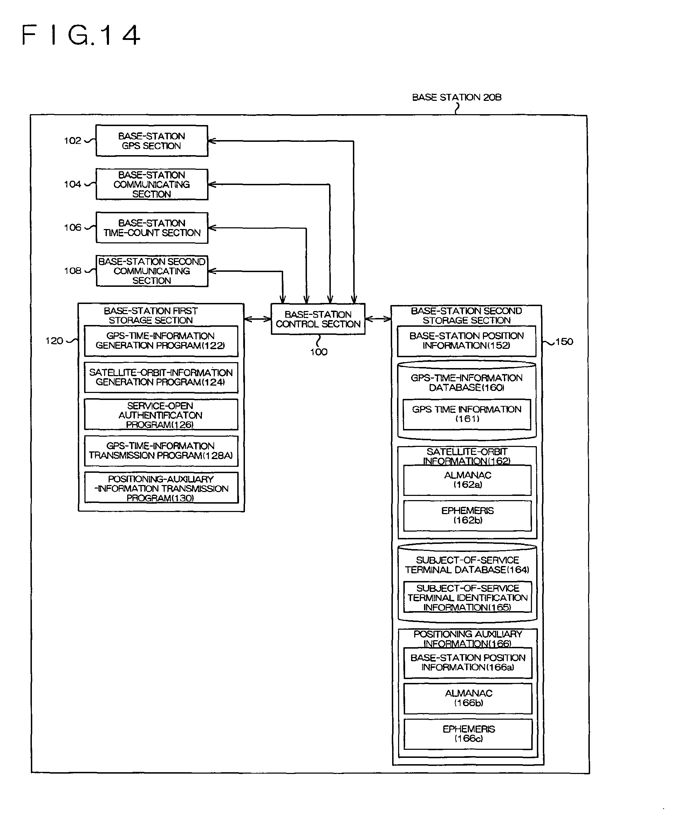

Fig. 14 is a schematic diagram showing a main software configuration of the base station 20B.

As shown in Fig. 14, the base station 20B stores a GPS-time information transmission program 128A, in its base-station first storage section 120. The GPS-time information transmission program 128A is a program that allows the base-station control section 100 to send the GPS-time information 161 as to the frame requested from the terminal 50. Namely, the GPS-time information transmission program 128A and the base-station control section 100 are as a whole an example of the requested-satellite-time information transmitting means.

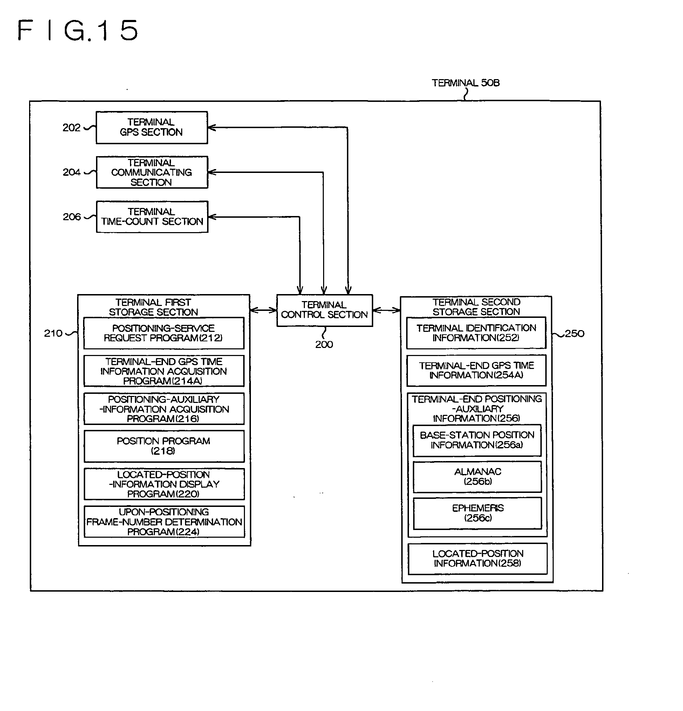

Fig. 15 is a schematic diagram showing a main software configuration of the terminal 50B.

As shown in Fig. 15, the terminal 50B stores a frame-number-upon-positioning determination program 224, in its terminal first storage section 210. The frame-number-upon-positioning determination program 224 is a program that allows the terminal control section 200 to determine a frame number of communication information CS (see Fig. 5) sent immediately before the positioning.

As shown in Fig. 15, the terminal 50B stores a terminal-end GPS-time information acquisition program 214A, in its terminal first storage section 210. The terminal-end GPS-time information acquisition program 214A is a program that allows the terminal control section 200 to acquire from the base station 20B the GPS-time information 161 corresponding to the frame number determined by the frame-number-upon-positioning determination program 224.

The terminal control section 200 stores the GPS-time information 161 acquired from the base station 20B, as terminal-end GPS-time information 254A, to the terminal second storage section 250.

As described above, the terminal 50B is allowed to acquire from the base station 20B the GPS-time information 161 as to the frame of communication information CS received by the terminal communicating section 204 immediately before the positioning. Meanwhile, it can also acquire positioning auxiliary information 166 from the base station 20B.

Thus, the terminal 50B is allowed to locate a position of the terminal 50 on the basis of the signals S1, etc. from the plurality of GPS satellites 12a, etc. by use of the terminal-end GPS-time information 254A and terminal-end positioning auxiliary information 256.

Namely, the terminal 50B can perform a positioning by use of the terminal-end GPS-time information 254A representative of a transmission time of the frame received immediately before the positioning. This can reduce the positioning time.

Meanwhile, because the terminal 50B can receive positioning auxiliary information 166 from the base station 20B beforehand, the positioning time can be reduced furthermore.

Programs and Computer-readable Recording Medium, etc.
The control program for a communication base station can be provided for allowing a computer to execute a step of generating satellite-time information, a step of generating satellite-orbit information, a step of transmitting satellite-time information, a step of transmitting positioning auxiliary information and so on as the above-described operational example.

Meanwhile, it is possible to provide a computer-readable recording medium or the like that is recorded with such a control program, etc. for a communication base station.

The program recording medium, for use in installing those control programs, etc. for a communication base station onto the computer into a state the computer is allowed to execute, can be realized by a semiconductor memory, magnetic disc or magneto-optical disc that can store the programs temporarily or permanently, besides a flexible disc, e.g. a floppy (registered trademark), a package media such as a CD-ROM (compact disc read only memory), CD-R (compact disc-recordable), CD-RW (compact disc-rewritable) or DVD (digital versatile disc).

The invention is not limited to the embodiments. Furthermore, the embodiments may be structured in a combination thereof.

## Claims

1. A positioning system, asynchronous between communication base stations, having a communication base station capable of receiving a satellite signal that is a signal from a positioning satellite and a terminal capable of communicating with the communication base station,
the communication base station comprising:
satellite-time information generating means for continuously generating satellite-time information representative of a satellite-time that is a time of the positioning satellites on the basis of the satellite signal;
satellite-orbit information generating means for generating satellite-orbit information at a time interval regulated by an effective time period of the satellite-orbit information representative of an orbit of the positioning satellite when generating the satellite-time information;
satellite-time information transmitting means for sending the satellite-time information to the terminal;
positioning-auxiliary information transmitting means for sending positioning auxiliary information including the satellite-orbit information to the terminal; and
the terminal comprising:
satellite-time information acquiring means for acquiring the satellite-time information from the communication base station;
positioning-auxiliary information acquiring means for acquiring the positioning auxiliary information from the communication base station; and
positioning means for locating a position of the terminal on the basis of a plurality of the satellite signals from the positioning satellites by use of the satellite-time information and the satellite-orbit information.

2. The positioning system of claim 1, wherein
communication information to be sent by the communication base station is constituted with a plurality of frames,
the satellite-time information generating means of the communication base station is configured to generate the satellite-time information at a constant interval of the frames,
the terminal has satellite-time estimating means for estimating the satellite-time information of the frames received immediately before, on the basis of an identification number of the frame received immediately before positioning and the satellite-time information generated by the base station.

3. A communication base station on a communication network asynchronous between communication base stations, the communication base station comprising:
satellite-time information generating means for generating continuously satellite-time information representative of a satellite-time that is a time of a positioning satellite, on the basis of a satellite signal from the positioning satellite;
satellite-orbit information generating means for generating satellite-orbit information at a time interval regulated by an effective time period of the satellite-orbit information representative of an orbit of the positioning satellite when generating the satellite-time information;
satellite-time information transmitting means for sending the satellite-time information to the terminal; and
positioning-auxiliary information transmitting means for sending positioning auxiliary information including the satellite-orbit information to the terminal.

4. A positioning system, asynchronous between communication base stations, having a communication base station capable of receiving a satellite signal that is a signal from a positioning satellite and a terminal capable of communicating with the communication base station,
the communication base station comprising:
communication-information transmitting means for sending communication information constituted by a plurality of frames to the terminal;
satellite-time information generating means for continuously generating satellite-time information representative of a satellite-time that is a time of the positioning satellite for each of the frames of the communication information on the basis of the satellite signal;
satellite-orbit information generating means for generating satellite-orbit information at a time interval regulated by an effective time period of the satellite-orbit information representative of an orbit of the positioning satellite when generating the satellite-time information;
requested-satellite-time information transmitting means that sends, to the terminal, satellite-time information as to the frame requested from the terminal;
positioning-auxiliary information transmitting means for sending positioning auxiliary information including the satellite-orbit information; and
the terminal comprising:
communication information receiving means for receiving the communication information from the communication base station;
satellite-time information acquiring means for acquiring the satellite-time information for the frame received immediately before positioning, from the communication base station;
positioning-auxiliary information acquiring means for acquiring the positioning auxiliary information from the communication base station; and
positioning means for locating a position of the terminal on the basis of the satellite signals from a plurality of the positioning satellites by use of the satellite-time information and the satellite-orbit information.

5. A communication base station on a communication network asynchronous between communication base stations, the communication base station comprising:
communication information transmitting means for sending communication information constituted by a plurality of frames, to the terminal;
satellite-time information generating means for continuously generating, satellite-time information representative of a satellite-time that is a time of a positioning satellites for each of the frames of the communication information on the basis of a satellite signal;
satellite-orbit information generating means for generating satellite-orbit information at a time interval regulated by an effective time period of the satellite-orbit information representative of an orbit of the positioning satellite when generating the satellite-time information;
requested-satellite-time information transmitting means for sending the satellite-time information as to the frame requested from the terminal, to the terminal; and
positioning-auxiliary information transmitting means for sending positioning auxiliary information including the satellite-orbit information to the terminal.

6. A control method for a communication base station, comprising the steps of:
generating continuously satellite-time information representative of a satellite-time that is a time of a positioning satellite on the basis of a satellite signal that is a signal from the positioning satellite, by the communication base station on a communication network asynchronous between communication base stations;
generating satellite-orbit information at a time interval regulated by an effective time period of satellite-orbit information representative of an orbit of the positioning satellite when generating the satellite-time information, by the communication base station;
sending the satellite-time information to the terminal, by the communication base station; and
sending positioning auxiliary information including the satellite-orbit information to the terminal, by the communication base station.

7. A communication base station control program allowing a computer to execute the steps of:
generating continuously satellite-time information representative of a satellite-time that is a time of a positioning satellite on the basis of a satellite signal that is a signal from the positioning satellite, by a communication base station on a communication network asynchronous between communication base stations;
generating satellite-orbit information at a time interval regulated by an effective time period of satellite-orbit information representative of an orbit of the positioning satellite when generating the satellite-time information, by the communication base station;
sending the satellite-time information to the terminal, by the communication base station; and
sending positioning auxiliary information including the satellite-orbit information to the terminal, by the communication base station.

8. A computer-readable recording medium recording a control program for a communication base station, allowing a computer to execute the steps of:
generating continuously satellite-time information representative of a satellite-time that is a time of a positioning satellite on the basis of a satellite signal that is a signal from the positioning satellite, by a communication base station on a communication network asynchronous between communication base stations;
generating satellite-orbit information at a time interval regulated by an effective time period of satellite-orbit information representative of an orbit of the positioning satellite when generating the satellite-time information, by the communication base station;
sending the satellite-time information to the terminal, by the communication base station; and
sending positioning auxiliary information including the satellite-orbit information to the terminal, by the communication base station.
